# EUROPÄISCHE PATENTSCHRIFT

(11) **EP 1 431 161 B1**
(45) Veröffentlichungstag und Bekanntmachung des Hinweises auf die Patenterteilung: **03.05.2006**
(21) Anmeldenummer: 03028023.4
(22) Anmeldetag: 18.12.2003
(51) Int. Cl.: B62D 5/04

(54) **Lenksystem für ein Fahrzeug**
Steering system for a vehicle
Système de direction pour un véhicule

(30) Priorität: 19.12.2002 DE 10259387
(43) Veröffentlichungstag der Anmeldung: 23.06.2004
(73) Patentinhaber: ZF Lenksysteme GmbH, 73527 Schwäbisch Gmünd (DE)
(72) Erfinder: Baur, Johannes, 73557 Mutlangen (DE); Gold, Hans-Jörg, 89558 Böhmenkirch (DE)

(56) Entgegenhaltungen:
- EP-A- 0 630 800
- EP-A- 1 167 093
- EP-B- 0 770 192
- DE-A- 19 748 667
- US-A- 6 029 768

## Beschreibung

Die Erfindung betrifft ein Lenksystem und einen Aktuator für ein Fahrzeug, insbesondere eine Servo- oder Hilfskraftlenkung für ein Kraftfahrzeug nach dem Oberbegriff des Anspruchs 1 und Anspruchs 25.

Hilfskraftlenkungen mit Lenkwellen- oder Lenkrohrantrieb sind aus H. Stoll "Fahrwerktechnik: Lenkanlagen und Hilfskraftlenkungen", Vogel Fachbuch, 1. Aufl. 1992, S. 222 ff. bekannt. Eine Lenkwelle oder Lenkrohr verbindet dabei eine als Lenkrad ausgebildete Lenkhandhabe mit einem Lenkgetriebe bestehend etwa aus einem Ritzel, welches mit einer Zahnstange kämmt.

An der Lenkwelle solcher Servo- oder Hilfskraftlenkungen ist ein Servomotor angeordnet, der auf eine getriebliche Verbindung der Lenkwelle mit dem Servomotor ein Drehmoment bereitstellt. Dieses Unterstützungs-Lenkdrehmoment des Servomotors kann parameterabhängig gesteuert sein.

Solche Servo- oder Hilfskraftlenkungen eignen sich zwar zum Umrüsten einer mechanischen Lenkung, haben aber im Lenksäulenbereich einen hohen Bauraumbedarf und sind wegen der getrieblichen Verbindung des Servomotors mit der Lenkwelle aufwändig zu bauen und teuer.

Die DE 198 53 343 A1 beschreibt eine elektrische Hilfskraftlenkung für ein Fahrzeug, die eine Lenksäule umfasst, wobei ein Abschnitt der Lenksäule als Läufer eines elektrischen Antriebs ausgebildet ist. Der elektrische Antrieb bringt ein die Drehbewegung der Lenksäule unterstützendes Drehmoment auf die Lenksäule auf. Die elektrische Hilfskraftlenkung hat zwar einen verminderten Bauraumbedarf, der Bauraumbedarf und der Energieverbrauch ist jedoch nicht minimiert.

Die DE 197 48 667 C2 und die EP 1 013 534 A1 beschreiben elektrische Hilfskraftlenkungen, bei denen eine harmonische Antriebsuntersetzung oder Pulsatorgetriebe zwischen einem Antrieb und einem als Ritzel ausgebildeten Lenkelement angeordnet ist. Ein flexibles Keilprofil oder Flexrotor ist bei derartigen Pulsatorgetrieben aus hochfestem Stahl mit geringsten Toleranzen herzustellen. Zudem vermag man mit einer Getriebestufe solcher Pulsatorgetriebe Untersetzungen von nicht mehr als 1:600 zu realisieren. Hohe Übersetzungen bei schnelllaufenden, drehmoment- und leistungsarmen Antrieben mit geringem Energie- und Bauraumbedarf bedürfen mehrerer Getriebestüfen und entsprechenden Bauraumbedarfs verbunden mit entsprechenden Kosten.

Der Erfindung liegt die Aufgabe zugrunde, ein Lenksystem für ein Fahrzeug zu schaffen, dessen Baüraumbedarf und Energiebedarf bei kostengünstiger Bauweise und hoher Funktionssicherheit minimiert ist.

Die Aufgabe wird mit einem Lenksystem mit den Merkmalen des Anspruchs 1 gelöst.

Um ein Lenksystem, das als Servo- oder Hilfskraftlenkung ausgebildet sein kann, in seinem Bauraum- und Energiebedarf zu minimieren, ist erfindungsgemäß vorgesehen, die getriebliche Verbindung zwischen dem Servomotor und dem Lenkgetriebe als klein bauendes, in einer Getriebestufe stark untersetzendes Hohlradpaarsystem auszubilden. Ein derartiges IKONA-Getriebe oder Hohlradpaarsystem ist in der DE 695 05 983 T2 und der US 5 505 668 beschrieben und besteht im wesentlichen aus einem Ritzel mit einer ersten Verzahnung auf dem Ritzel, einem Hohlrad mit einer zweiten Verzahnung, die in die erste Verzahnung des Ritzels eingreift. Das Hohlrad weist mindestens einen Zahn mehr auf als das Ritzel und der einzige Kontakt zwischen den Verzahnungen besteht ausschließlich auf einer Seite der Linie, die diametrisch durch die Zentren von Ritzel und Hohlrad läuft. Die erste Verzahnung ist zu der zweiten Verzahnung konjugiert, d.h. es ist eine Zahnform gewählt, bei der die zwei ineinandergreifenden Verzahnungen stets ein konstantes Verhältnis der Winkelgeschwindigkeiten der jeweiligen Räder aufweisen. Der Eingriffswinkel am Kopf jedes Zahnes der zweiten Verzahnung ist 2 bis 16 Grad. Das Ritzel wird von einem Exzenter, der drehfest auf einer von einem Servomotor angetriebenen Antriebswelle des Hohlradpaarsystems sitzt, in epizyklische Bewegung versetzt. Das Ritzel greift dabei mit einer weiteren Verzahnung an dessen Umfang in eine Verzahnung an dem Gehäuse des Hohlradpaarsystems ein. Mit dem Hohlrad ist eine Ausgangswelle des Hohlradpaarsystems drehfest verbunden. Die Ausgangswelle des Hohlradpaarsystems kann als Eingangswelle eines Lenkgetriebes wirken.

Mit solchen Hohlradpaarsystemen lassen sich in einer Getriebestufe Untersetzungen von 1:9 bis 1:5000 erreichen. Sie ermöglichen die Anwendung sehr klein bauender, schnelllaufender Elektromotoren als Servomotoren, um ein hohes Drehmoment bereitzustellen. Zudem bedarf es zur Herstellung solcher Hohlradpaarsysteme keiner teuren Werkstoffe und Herstellungsverfahren. Solche Hohlradpaarsysteme sind spielfrei und über ihre Lebensdauer verschleißarm.

Bevorzugte Ausrührungen ergeben sich aus den Unteransprüchen.

Um den Bauraumbedarf des Lenksystems zu minimieren, ist es ferner zweckmäßig, die Längsachse des Hohlradpaarsystems koaxial zu der Lenkwellen-Längsachse anzuordnen. Der Servomotor, welcher bevorzugt als Elektromotor ausgebildet ist und an der Lenkwelle angeordnet ist, ist so an die Lenkwelle angebaut, dass seine Längsachse bevorzugt kongruent mit der Längsachse des Hohlradpaarsystems und der Lenkwelle ist.

Der Elektromotor ist zweckmäßig als Hohlwellenmotor ausgebildet. Der Läufer des Elektromotors ist auf einer Hohlwelle, die um die Lenkwelle drehbar angeordnet ist, festgelegt, wobei die Hohlwelle um die Lenkwelle drehbar gelagert ist. Die Hohlwelle ist drehfest mit einer Eingangswelle des Hohlradpaarsystems oder IKONA-Getriebes verbunden. Die Lenkwelle ist drehfest mit einer Ausgangswelle des Hohlradpaarsystems verbunden, wobei die Lenkwelle das Hohlradpaarsystem vorzugsweise durchgreift oder übergreift. Die Ausgangswelle des Hohlradpaarsystems bildet eine Eingangswelle für das Lenkgetriebe, das als Zahnstangenlenkgetriebe ausgebildet sein kann.

Um Drehmomentschwankungen an der Lenkhandhabe des Lenksystems durch Wirkung des Gegendrehmomerites des Servomotors zu vermeiden, ist es zweckmäßig, das Drehmoment des Servomotors an einem anderen fahrzeugfesten Bauteil des Lenksystems oder des Fahrzeugs abzustützen als an der Lenksäule. In einer besonders bevorzugten Ausführungsform des Lenksystems ist der Servomotor getrennt von dem Hohlradpaarsystem fahrzeugfest angeordnet und dessen Motorwelle mit einem Getriebe, das als Zugmittelgetriebe oder als Zahnradgetriebe ausgeführt sein kann, mit der Antriebswelle des Hohlradpaarsystems drehbar verbunden.

Der Servomotor wird von einer Steuerungs- und/oder Regelungseinrichtung angesteuert, wobei die Steuerungs- und/oder Regelungseinrichtung eingangsseitig mit einem vorzugsweise kontaktlos arbeitenden Drehmomentsensor zur Bestimmung des Lenkdrehmomentes und/oder mit einem Sensor zur. Bestimmung des Drehwinkels der Lenkhandhabe und/oder mit einem Motorsensor zur Ermittlung der Drehgeschwindigkeit und der Drehrichtung des Läufers des Servomotors signalübertragend verbunden ist. Verschiedene Fahrt- und Fahrzeugparameter können als Eingangsgrößen für ein Kennfeld des Servomotors herangezogen werden.

Zweckmäßig sind der Servomotor, die Steuerungs- und/oder Regelungseinrichtung, das Hohlradpaarsystem und die Sensoren zur Drehwinkel- und Drehmomentbestimmung der Lenkhandhabe in einem Gehäuse zusammengefasst. Das Gehäuse umschließt die Lenkwelle und ist Teil der Lenksäule.

Es kann zweckmäßig sein, den Drehmomentsensor und/oder den Sensor zur Bestimmung des Drehwinkels der Lenkhandhabe räumlich von dem Hohlradpaarsystem und dem Servomotor zu trennen und in der Lenksäule oder an anderer geeigneter Stelle anzuordnen.

Eine bevorzugte Ausführungsform des Lenksystems sieht vor, dass die Lenkwelle axial unterbrochen ist, sodass sich ein der Lenkhandhabe anschließender Eingangswellenabschnitt und ein diesem axial sich anschließender Ausgangswellen-Abschnitt der Lenkwelle ergibt. Die Eingangswelle ist mit der Ausgangswelle mit einem Torsionselement, bevorzugt mit einem Drehstab verbunden. In dem von dem Drehstab gebildeten axialen Abschnitt der Lenkwelle ist der Drehmomentsensor zwischen Eingangswelle und Ausgangswelle angeordnet, wobei es zweckmäßig ist, den sich in Abhängigkeit von dem jeweiligen Lenkdrehmoment verändernden magnetischen Widerstand in einer Sensorspule an der Ausgangswelle zu ermitteln. Der magnetische Widerstand ändert sich hierbei unter dem Einfluss der Lageänderung eines an der Eingangswelle angeordneten Magneten.

Zur Erhöhung der Betriebssicherheit des Lenksystems ist es zweckmäßig, die Stromzufuhr und/oder die Signalleitung zu dem Servomotor oder zu der Steuerungs- und/oder Regelungseinrichtung ohne Übertragungseinrichtung wie etwa Schleifern oder Wickelfedern zu gestalten.

Aufgrund der örtlichen Nähe der Sensoren zu der Steuerungs- und/oder Regelungseinrichtung und dem Servomotor lassen sich die Sensoren durch feste elektrische Leiter ohne Zuhilfenahme von Steckem und Kabeln mit der Steuerungs- und/oder Regelungseinrichtung verbinden.

Das Hohlradpaarsystem ist für den Einsatz in Servolenkungen bevorzugt aus Stahl gebildet. Es kann zweckmäßig sein, Komponenten auch aus Kunststoff zu bilden.
Das Lenksystem kann als Pinion- oder Double-Pinion-Lenksystem ausgebildet sein.

Zweckmäßig ist zwischen der Ausgangswelle des Hohlradpaarsystems und dem Lenkgetriebe, insbesondere dessen Eingangswelle, eine Kupplung, vorzugsweise eine elektromechanische Kupplung angeordnet. Das Hohlradpaarsystem kann auch zum direkten Antrieb eines anderen Bauteils des Lenksystems als einer Zahnstange oder einer Lenkspindel, wie einer Spurstange, einem Radlenkhebel oder eines Lenkstockhebels dienen.

Ein Aktuator, der in der genannten Weise aus einem Servomotor der eine Antriebswelle eines Hohlradpaarsystems antreibt, gebildet ist, ist für weitere Stellfunktionen an einem Fahrzeug oder in Anlagen und Maschinen einsetzbar.

Die Erfindung wird nun näher anhand zweier Ausführungsbeispiele beschrieben und anhand der beiliegenden Zeichnung wiedergegeben.
- Fig. 1: zeigt einen schematischen Längsschnitt durch ein erfindungsgemäßes Lenksystem,
- Fig. 2: zeigt einen Querschnitt entlang der Linie II-II durch das Lenksystem in Fig. 1,
- Fig. 3: zeigt eine schematische Vorderansicht der Kopfkreise für das Ritzel und das Hohlrad eines Hohlradpaarsystems,
- Fig. 4, 5: zeigen schematische Vorderansichten der überlappenden Flächen der Kopfkreise mit den Zahnkontaktlinien für das in Fig. 1 und 2 dargestellte Hohlradpaarsystem,
- Fig. 6: zeigt einen weiteren schematischen Längsschnitt durch ein erfindungsgemäßes Lenksystem.

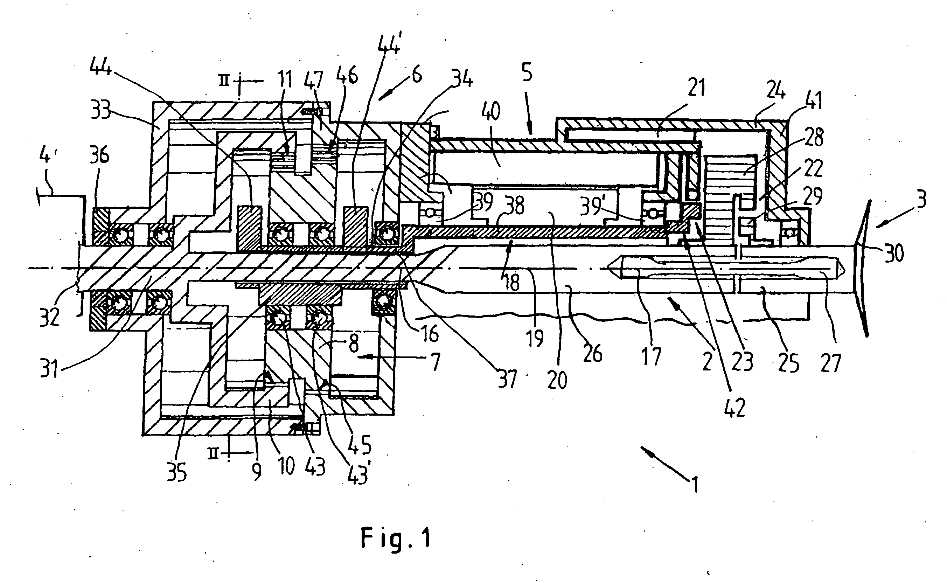

In Figur 1 ist in einem schematischen Längsschnitt teilweise ein Lenksystem 1 für ein Fahrzeug dargestellt. Das Lenksystem 1 ist in dem gezeigten Ausführungsbeispiel als Servo- oder Hilfskraftlenkung mit Lenkrohr- oder Lenkwellenantrieb ausgebildet.

Eine Lenkhandhabe 3, die als Lenkrad 30 ausgebildet ist, ist mechanisch über eine Lenkwelle 2 mit einem Lenkgetriebe 4 drehfest verbunden. Das Lenkgetriebe 4 kann aus einem Ritzel, das mit einer axialverschieblich gelagerten Zahnstange kämmt, gebildet sein. Das Ritzel bildet hierbei das axiale Ende der Lenkwelle 2 oder einer Eingangswelle 32 in das Lenkgetriebe 4. Die nicht dargestellte Zahnstange ist in bekannter Weise mit Spurhebeln an nicht dargestellten lenkbaren Rädern des Fahrzeugs gelenkig verbunden.

Zur Bereitstellung eines Drehmomentes oder Unterstützungslenkdrehmomentes auf die Lenkwelle 2 ist in dem gezeigten Ausführungsbeispiel ein als Hohlwellenmotor ausgebildeter Elektromotor 18 vorgesehen. Der Elektromotor 18 dient als Servomotor 5 des Lenksystems 1 und wirkt über eine getriebliche Verbindung 6 auf die Lenkwelle 2 und auf das mit deren axialen Ende drehfest verbundene Ritzel oder auf die Eingangswelle 32 des Lenkgetriebes 4.

Um den Bauraumbedarf des Lenksystems 1 zu minimieren und dennoch ein ausreichendes Unterstützungslenkdrehmoment auf die Lenkwelle 2 aufzubringen, ist vorgesehen, die getriebliche Verbindung 6 als Hohlradpaarsystem 7 oder IKONA-Getriebe auszubilden. Eine derartige getriebliche Verbindung ist in der Lage, bei Verwendung üblicher, kostengünstiger Werkstoffe und Herstellungsverfahren Übersetzungsverhältnisse von 1:9 bis 1:5000 zu realisieren, sodass ein als kleinbauender Elektromotor mit geringem Energiebedarf ausgebildeter Servomotor einsetzbar ist.

Das in Fig. 1 in einem schematischen Längsschnitt dargestellte Hohlradpaarsystem 7 ist aus einem zylinderförmigen, zweiteiligen Gehäuse 33 gebildet. Das Gehäuse 33 wird axial von der in diesem Bereich einstückig gebildeten Lenkwelle 2 durchragt. Radial um die Lenkwelle 2 ist eine als Hohlwelle 37 ausgebildete Antriebswelle 34 in dem dem Servomotor 5 zugewandten Gehäuseabschnitt des Gehäuses 33 geführt. Die Antriebswelle 34 ist drehfest mit einer Hohlwelle 38, auf der ein Läufer 20 des Servomotors 5 angeordnet ist, verbunden.

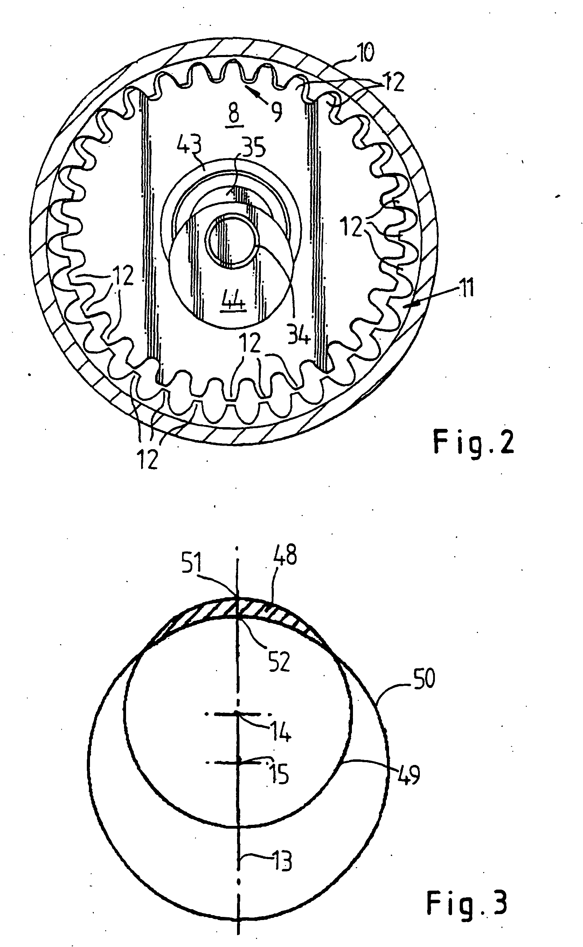

Auf der Antriebswelle 34 befindet sich in dem Gehäuse 33 des Hohlradpaarsystems 7 ein Exzenter 35, ein als Planetenrad ausgebildetes Ritzel 8, das mit einer ersten Verzahnung 9 ein Hohlrad 10 mit dessen zweiter Verzahnung 11 antreibt (vgl. Fig. 2). Das Exzenter 35 bewirkt dabei durch seine Rotation in dem Ritzel 8 eine epizyklische Bewegung des Ritzels 8.

Eine Ausgangswelle 31 des Hohlradpaarsystems 7 ist wiederum drehfest mit dem Hohlrad 10 verbunden und durchragt, mit der Lenkwelle 2 eine bauliche Einheit bildend, eine Gehäusestimwand 36 des Gehäuses 33 zu dem Lenkgetriebe 4. Die Längsachse 16 des Hohlradpaarsystems 7 ist koaxial zu der Längsachse 17 der Lenkwelle 2.

Der als Hohlwellen-Elektromotor 18 ausgebildete Servomotor 5 ist mit axialem Abstand zu dem Lenkrad 30 angeordnet und wird von der Lenkwelle 2, die im axialen Bereich vom Hohlradpaarsystem 7 und dem Servomotor 5 einstückig gebildet ist, durchragt. Der drehfest mit der Hohlwelle 38 verbundene Läufer 20 des Servomotors 5 rotiert um die Lenkwelle 2. Zu diesem Zweck ist die Hohlwelle 38 des Läufer 20 mit Hilfe von Lagern 39, 39' an einem Gehäuse 24 des Servomotors 5 gehalten und treibt in genannter Weise die Antriebswelle 34 mit dem Ritzel 8 an. Ein Stator 40 des Elektromotors 18 ist fest an dem Gehäuse 24 des Servomotors 5 angebunden. Das Gehäuse 24 umschließt den Elektromotor 18, eine Steuerungs- und/oder Regelungseinrichtung 21 für den Elektromotor 18, sowie einen kontaktlos arbeitenden Drehmomentsensor 22 und einen Sensor 23 zur Bestimmung des Drehwinkels und der Drehgeschwindigkeit der Lenkhandhabe 3. Das Gehäuse 24 ist direkt an das Gehäuse 33 des Hohlradpaarsystems 7 angebunden.

Wie Figur 1 zeigt, ist die Lenkwelle 2 in dem Gehäuse 24 in einem von dem Elektromotor 18 abgewandten axialen Abschnitt in eine Eingangswelle 25, die drehfest mit dem Lenkrad 30 verbunden ist, und eine Ausgangswelle 26, die drehfest mit dem Hohlrad 10 und der Ausgangswelle 31 des Hohlradpaarsystems 7, verbunden ist, geteilt. Die Eingangswelle 25 ist mit der Ausgangswelle 26 über ein als Drehstab ausgebildetes Torsionselement 27 verbunden.

Die Steuerungs- und/oder Regelungseinrichtung 21 ist eingangsseitig mit dem kontaktlos arbeitenden Drehmomentsensor 22 zur Bestimmung des Lenkdrehmomentes und dem Sensor 23 für den Drehwinkel der Lenkhandhabe 3 und weiterer Sensoren signalübertragend verbunden. Aufgrund der räumlichen Nähe der Sensoren 22, 23 zu der Steuerungs- und/oder Regelungseinrichtung 21 können diese ohne Steckverbindungen direkt mit der Steuerungs- und/oder Regelungseinrichtung 21 verbunden werden.
Die Stromzufuhr und die Signalleitung zu dem Servomotor 5 erfolgt in den gezeigten Ausführungsbeispielen ohne Übertragungseinrichtungen, wie Schleifer oder Wickelfedem.

In dem Gehäuse 24 ist zwischen dessen ienkradseitiger Stirnwand 41 und der Hohlwelle 38 des Läufers 20 der Drehmomentsensor 22 angeordnet. Der Drehmomentsensor 22 besteht aus einem mit der Eingangswelle 25 der Lenkwelle 2 drehfest verbundenen Magneten 29, der den magnetischen Widerstand einer drehfest mit der Ausgangswelle 26 der Lenkwelle 2 verbundenen Sensorspule 28 verändert.

In axialer Richtung der Lenkwelle 2 betrachtet, ist zwischen dem Drehmomentsensor 22 und dem Läufer 20 ein Motorsensor 42 zur Ermittlung der Drehgeschwindigkeit und / oder des Drehwinkels des Läufers 20 angeordnet. Der Motorsensor 42 ist in kontaktloser Funktionsweise ausgeführt und mit der Steuerungs- und/oder Regelurigseinrichtung 21 signalübertragend verbunden.

Im Betrieb des Lenksystems 1 führt der Läufer 20 des Servomotors 5 in Abhängigkeit von der an der Lenkhandhabe aufgebrachten Drehmoment und der Drehgeschwindigkeit oder Verstellgeschwindigkeit der Lenkhandhabe eine Drehung in die eine oder andere Richtung aus. Dabei treibt die Hohlwelle 38, auf der der Läufer festgelegt ist, die Antriebswelle 34 des Hohlradpaarsystems 7 mit dem Exzenter 35 an.

Der Exzenter 35 auf der Antriebswelle 34 trägt das Ritzel 8, das durch Kugellager 43,43' in dem Gehäuse 33 des Hohlradpaarsystems 7 in radialer Richtung vom Exzenter 35 getrennt ist. An beiden Seiten des Ritzels 8, in axialer Richtung betrachtet, sind auf der Antriebswelle 34 Gegengewichte 44,44' festgelegt.

Das Ritzel 8 weist eine Verzahnung 45 an dessen Umfang auf, die in axialer Richtung benachbart zu dem Servomotor 5 ist. Mit dieser Verzahnung 45 greift das Ritzel 8 in eine Verzahnung 46 eines Flansches 47 des Gehäuses 33 des Hohlradpaarsystems ein, wobei der Flansch 47 radial ins Gehäuseinnere des Gehäuses 33 ragt.

Die erste Verzahnung 9 des Ritzels 8, die in axialer Richtung am ausgangsseitigen Ende des Hohlradpaarsystems an dem Ritzel 8 an dessen Umfang angeordnet ist, greift in eine zweite Verzahnung 11 an dem Hohlrad 10 ein.

Dadurch wird das Hohlrad 10 und die Ausgangswelle 31 des Hohlradpaarsystems 7, mit dem das Hohlrad 10 drehfest verbunden ist, mit verringerter Geschwindigkeit angetrieben. Die Geschwindigkeit richtet sich nach dem Zähnezahl-Verhältnis der beiden Hohlradpaare.

Fig. 3 zeigt die Kopfkreise eines Hohlradpaares, wie dem Ritzel 8 und dem Hohlrad 10, dessen Verzahnung in Fig. 1 als 9 und 11 bezeichnet wird, oder als 45 und 46 bezeichnet wird, da das Ritzel 8 und das Hohlrad 10 zwei Verzahnungen aufweisen.

Eine Überlappungsfläche 48 zwischen dem Kopfkreis 49 der Verzahnung 9 des Ritzels und dem Kopfkreis der Verzahnung 11 des Hohlrades ist halbkreisförmig. Die Überlappungsfläche 48 ist die einzige Fläche, in der Überlappung erfolgt und in der Zahnkontakt besteht.

Eine durch die Radmitte 14 des Ritzels 8 und die Radmitte 15 des Hohlrades 10 laufende Linie 13 schneidet die Kopfkreise 49 und 50 an Punkten 51 und 52. Die Arbeitstiefe der Verzahnung ist die Entfernung zwischen den Punkten 51 und 52.
Die Linie 13 verläuft diametrisch durch die Zentren 14 und 15 des Ritzels 8 und des Hohlrades 10.

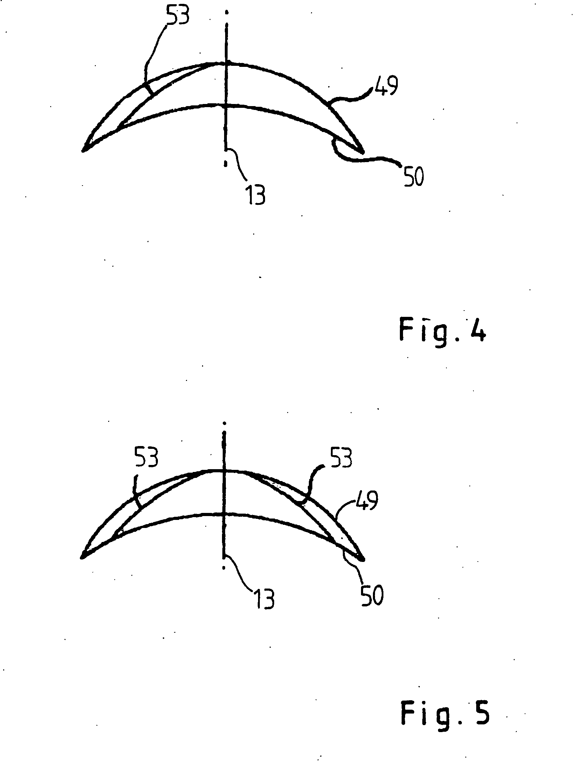

Es wird eine konjugierte Zahnform verwendet, wie Fig. 4 zeigt, wobei der Wälzpunkt immer auf einer Seite der Linie 13 außerhalb der zwischen den Schnittpunkten 51 und 52 befindlichen Flächen liegt.

Es ist zu beachten, dass, wenn die Kontaktlinie 53 bei Drehung im Uhrzeigersinn verlängert wird, sie die Linie 13, über der Überlappungsfläche 48 schneidet. Dasselbe gilt für die entgegengesetzte Drehrichtung, wie Fig. 5 zeigt. Der Eingriffswinkel am Kopf jedes Zahnes 12 der zweiten Verzahnung 11 liegt zwischen 2 und 16 Grad. Konstruktive Details des Hohlradpaarsystems sind in der DE 695 05983 T2 beschrieben. Das Hohlradpaarsystem 7 kann aus metallischem Werkstoff wie Stahl oder aus Kunststoff gebildet sein. Das Lenksystem selbst kann als Pinion- oder Double-Pinion-Lenkung aufgebaut sein.

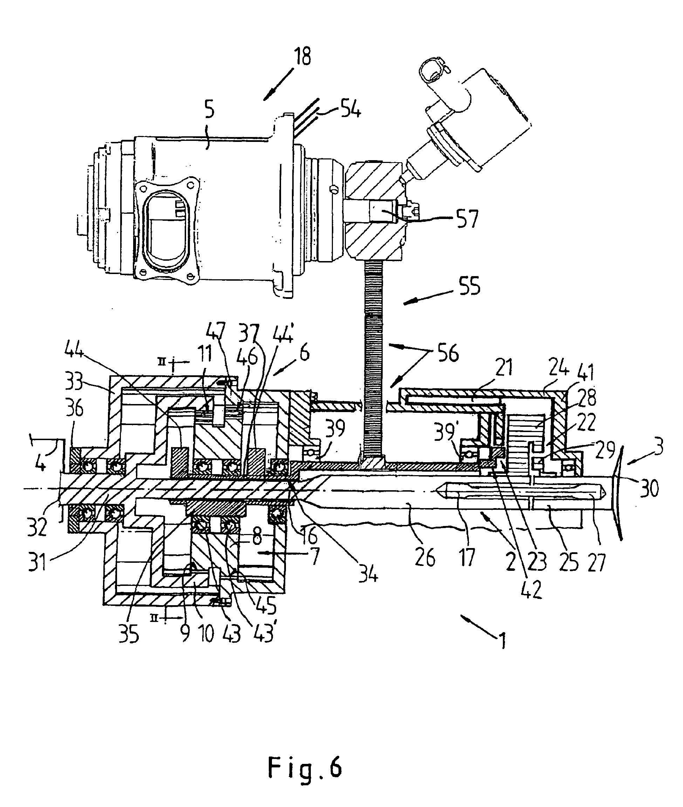

In Fig. 6 ist ein schematischer Längsschnitt durch ein Lenksystem gezeigt, dessen Servomotor 5 an einem fahrzeugfesten Bauteil 54, das nicht die Lenksäule eines Fahrzeugs ist, festgelegt ist. Die Motorwelle 57 des Servomotors 5 ist über ein Getriebe 55 drehfest mit der Antriebswelle 34 des Hohlradpaarsystems 7 verbunden. Das Getriebe 55 ist in dem gezeigten Ausführungsbeispiel als Zugmittelgetriebe 56 mit einem Zahnriementrieb ausgeführt. Für gleiche Bauteile gelten dieselben Bezugszeichen wie in Fig. 1.

## Patentansprüche

1. Lenksystem für ein Fahrzeug, insbesondere Servo- oder Hilfskraftlenkung für ein Kraftfahrzeug, mit einer Lenkwelle (2) zur Wirkverbindung einer Lenkhandhabe (3) mit einem Lenkgetriebe (4), und mit einem Servomotor (5) zur Bereitstellung eines Drehmomentes auf eine Antriebswelle (34) einer getrieblichen Verbindung (6) zwischen dem Servomotor (5) und dem Lenkgetriebe (4), **dadurch gekennzeichnet, dass** die getriebliche Verbindung (6) ein Hohlradpaarsystem (7) ist, bestehend aus einem Ritzel (8) mit einer ersten Verzahnung (9), das epizyklisch von einem Exzenter (35) auf der Antriebswelle (34) bewegt wird, mit einem Hohlrad (10) mit einer zweiten Verzahnung (11), die zur Rotation des Hohlrades (10) durch das Ritzel (8) in die erste Verzahnung (9) eingreift, wobei das Hohlrad (10) zumindest einen Zahn (12) mehr aufweist als das Ritzel (8) und wobei der einzige Kontakt zwischen der ersten Verzahnung (9) und der zweiten Verzahnung (11) ausschließlich auf einer Seite der Linie (13) besteht, die diametrisch durch die Zentren (14,15) des Ritzels (8) und des Hohlrades (10) läuft und wobei die erste Verzahnung (9) zu der zweiten Verzahnung (11) konjugiert ist und der Eingriffswinkel am. Kopf jedes Zahnes der zweiten Verzahnung (11) zwischen 2 und 16 Grad beträgt.

2. Lenksystem für ein Fahrzeug, insbesondere Servo- oder Hilfskraftlenkung für ein Kraftfahrzeug, mit einer Lenkwelle (2) zur Wirkverbindung einer Lenkhandhabe (3) mit einem Lenkgetriebe (4), und mit einem Servomotor (5) zur Bereitstellung eines Drehmomentes auf eine Antriebswelle (34) einer getrieblichen Verbindung (6) zwischen dem Servomotor (5) und dem Lenkgetriebe (4), **dadurch gekennzeichnet, dass** die getriebliche Verbindung (6) ein Hohlradpaarsystem (7) ist, bestehend aus einem drehfest mit der Antriebswelle (34) verbundenen Exzenter (35) das bei Rotation der Antriebswelle (34) eine epizyklische Bewegung eines Ritzels (8) bewirkt, wobei das Ritzel (8) mit einer Verzahnung (45) an dessen Umfang in eine gehäusefeste Verzahnung (46) eines Gehäuses (33) des Hohlradpaarsystems (7) eingreift, und mit einer ersten Verzahnung (9) an dem Ritzel (8) die in eine zweite Verzahnung (11) eines drehbar in dem Gehäuse (33) gelagerten Hohlrades (10) zur Rotation einer Ausgangswelle (31) des Hohlradpaarsystems (7) eingreift, wobei das Hohlrad (10) zumindest einen Zahn (12) mehr aufweist als das Ritzel (8) und wobei der einzige Kontakt zwischen der ersten Verzahnung (9) und der zweiten Verzahnung (11) ausschließlich auf einer Seite einer Linie (13) besteht, die diametrisch durch die Zentren (14,15) des Ritzels (8) und des Hohlrades (10) läuft und wobei die erste Verzahnung (9) zu der zweiten Verzahnung (11) konjugiert ist und der Eingriffswinkel am Kopf jedes Zahnes der zweiten Verzahnung (11) zwischen 2 und 16 Grad beträgt.

3. Lenksystem nach Anspruch 1 oder 2, **dadurch gekennzeichnet, dass** eine Längsachse (16) des Hohlradpaarsystems (7) koaxial zu der Längsachse (17) der Lenkwelle (2) ist.

4. Lenksystem nach Anspruch 3, **dadurch gekennzeichnet, dass** die Lenkwelle (2) das Hohlradpaarsystem (7) übergreift oder durchgreift und drehfest mit einer Ausgangswelle (31) des Hohlradpaarsystems (7) verbunden ist.

5. Lenksystem nach Anspruch 3 oder 4, **dadurch gekennzeichnet, dass** der Servomotor (5) ein Elektromotor (18) ist und an der Lenkwelle (2) angeordnet ist.

6. Lenksystem nach einem der Ansprüche 1 bis 5, **dadurch gekennzeichnet, dass** die Längsachse (19) des Servomotors (5) kongruent zu der Längsachse (16) des Hohlradpaarsystems (7) ist.

7. Lenksystem nach Anspruch 5 oder 6, **dadurch gekennzeichnet, dass** der Elektromotor (18) als Hohlwellenmotor ausgebildet ist, wobei der Läufer (20) des Elektromotors (18) um die Lenkwelle (2) drehbar ist.

8. Lenksystem nach einem der Ansprüche 1 bis 7, **dadurch gekennzeichnet, dass** das Drehmoment des Servomotors (5) an einem fahrzeugfesten anderen Bauteil (54) des Lenksystems (1) oder des Fahrzeugs abgestützt ist, als an einer Lenksäule.

9. Lenksystem nach einem der Ansprüche 1 bis 5 und 8, **dadurch gekennzeichnet, dass** der Servomotor (5) über ein Getriebe (55) mit der Antriebswelle (34) des Hohlradpaarsystems (7) verbunden ist.

10. Lenksystem nach Anspruch 9, **dadurch gekennzeichnet, dass** das Getriebe (55) ein Zugmittelgetriebe (56) ist.

11. Lenksystem nach Anspruch 9, **dadurch gekennzeichnet, dass** das Getriebe (55) ein Zahnradgetriebe ist.

12. Lenksystem nach einem der Ansprüche 1 bis 11, **dadurch gekennzeichnet, dass** der Servomotor (5) von einer Steuerungs- und/oder Regelungseinrichtung (21) angesteuert ist, wobei die Steuerungs- und/oder Regelungseinrichtung (21) eingangsseitig mit einem Drehmomentsensor (22) zur Bestimmung des Lenkdrehmomentes und /oder mit einem Sensor (23) zur Bestimmung des Drehwinkels der Lenkhandhabe (3) und/oder mit einem Motorsensor (42) verbunden ist.

13. Lenksystem nach Anspruch 12, **dadurch gekennzeichnet, dass** der Servomotor (5) mit der Steuerungs- und/oder Regelungseinrichtung (21), das Hohlradpaarsystem (7) die Sensoren (22,23) zur Bestimmung des Lenkdrehmomentes und des Drehwinkels der Lenkhandhabe (3) und der Motorsensor (42) in einem einzigen Gehäuse (24) zusammengefasst sind.

14. Lenksystem nach Anspruch 12, **dadurch gekennzeichnet, dass** der Drehmomentsensor (22) und/oder der Sensor (23) zur Bestimmung des Drehwinkels der Lenkhandhabe (3) räumlich von dem Hohlradpaarsystem (7) und dem Servomotor (5) getrennt ist.

15. Lenksystem nach einem der Ansprüche 1 bis 14, **dadurch gekennzeichnet, dass** die Lenkwelle (2) axial in eine Eingangswelle (25) und eine Ausgangswelle (26) aufgeteilt ist, wobei die Eingangswelle (25) mit der Ausgangswelle (26) über ein Torsionselement (27) verbunden ist.

16. Lenksystem nach Anspruch 15, **dadurch gekennzeichnet, dass** der Drehmomentsensor (22) axial zwischen der Eingangswelle (25) und der Ausgangswelle (26) der Lenkwelle (2) angeordnet ist, wobei der sich in Abhängigkeit von dem jeweiligen Lenkdretimoment verändernde magnetische Widerstand in einer Sensorspule (28) an der Ausgangswelle (26) unter Einfluss eines an der Eingangswelle (25) angeordneten Magneten (29) ermittelt ist.

17. Lenksystem nach einem der Ansprüche 1 bis 16, **dadurch gekennzeichnet, dass** die Stromzufuhr und/oder die Signalleitung zu dem Servomotor (5) oder zu der Steuerungs- und/oder Regelungseinrichtung (21) ohne Übertragungseinrichtung wie Schleifer oder Wickelfedern erfolgt.

18. Lenksystem nach einem der Ansprüche 12 bis 16 **dadurch gekennzeichnet, dass** der Drehmomentsensor (22) ohne Steckverbindungen, mit Kontaktierungen signalleitend mit der Steuerungs- und/oder Regelungseinrichtung (21) verbunden ist.

19. Lenksystem nach einem der Ansprüche 1 bis 18, **dadurch gekennzeichnet, dass** das Hohlradpaarsystem (7) im wesentlichen aus Stahl gebildet ist.

20. Lenksystem nach einem der Ansprüche 1 bis 19, **dadurch gekennzeichnet, dass** das Hohlradpaarsystem (7) im wesentlichen aus Kunststoff gebildet ist.

21. Lenksystem nach einem der Ansprüche 1 bis 20, **dadurch gekennzeichnet, dass** das Lenksystem (1) als Pinion- oder Double-Pinion-Lenkung ausgebildet ist.

22. Lenksystem nach einem der Ansprüche 1 bis 21, **dadurch gekennzeichnet, dass** zwischen dem Hohlradpaarsystem (7) und dem Lenkgetriebe (4) eine Kupplung angeordnet ist.

23. Lenksystem nach einem der Ansprüche 1 bis 22, **dadurch gekennzeichnet, dass** das Lenkgetriebe (4) durch das Hohlradpaarsystem (7) gebildet ist.

24. Lenksystem nach einem der Ansprüche 1 bis 23, **dadurch gekennzeichnet, dass** das Lenkgetriebe (4) zum direkten Antrieb eines Radlenkhebels oder einer Spurstange oder eines Lenkstockhebels dient.

25. Aktuator in einem Lenksystem eines Fahrzeugs, mit einem Servomotor (5), wobei der Servomotor (5) eine Antriebswelle (34) eines Holradpaarsystems (7) gemäß den Ansprüchen 1 oder 2 antreibt.

## Claims

1. Steering system for a vehicle, in particular power steering system or power-assisted steering system for a motor vehicle, having a steering shaft (2) for operatively connecting a steering handle (3) to a steering gear mechanism (4), and having a servomotor (5) for providing a torque to a drive shaft (34) of a geared connection (6) between the servomotor (5) and the steering gear mechanism (4), **characterized in that** the geared connection (6) is a paired internal gear system (7), comprising a pinion (8) with a first toothing system (9) which is moved epicyclically by an eccentric (35) on the drive shaft (34), having an internal gear (10) with a second toothing system (11) which engages in the first toothing system (9) in order to rotate the internal gear (10) by means of the pinion (8), the internal gear (10) having at least one tooth (12) more than the pinion (8) and the only contact between the first toothing system (9) and the second toothing system (11) taking place exclusively on one side of the line (13) which runs diametrically through the centres (14, 15) of the pinion (8) and the internal gear (10), and the first toothing system (9) being conjugate with respect to the second toothing system (11) and the angle of engagement at the tip of each tooth of the second toothing system (11) being between 2 and 16 degrees.

2. Steering system for a vehicle, in particular power steering system or power-assisted steering system for a motor vehicle, having a steering shaft (2) for operatively connecting a steering handle (3) to a steering gear mechanism (4), and having a servomotor (5) for providing a torque to a drive shaft (34) of a geared connection (6) between the servomotor (5) and the steering gear mechanism (4), **characterized in that** the geared connection (6) is a paired internal gear system (7), comprising an eccentric (35) which is connected fixedly in terms of rotation to the drive shaft (34) and brings about an epicyclic movement of a pinion (8) when the drive shaft (34) rotates, the pinion (8) engaging, with a toothing system (45) on its circumference, in a toothing system (46) which is fixed to a housing (33) of the paired internal gear system (7), and having a first toothing system (9) on the pinion (8) which engages in a second toothing system (11) of an internal gear (10) which is mounted rotatably in the housing (33) in order to rotate an output shaft (31) of the paired internal gear system (7), the internal gear (10) having at least one tooth (12) more than the pinion (8) and the only contact between the first toothing system (9) and the second toothing system (11) taking place exclusively on one side of a line (13) which runs diametrically through the centres (14, 15) of the pinion (8) and the internal gear (10), and the first toothing system (9) being conjugate with respect to the second toothing system (11) and the angle of engagement at the tip of each tooth of the second toothing system (11) being between 2 and 16 degrees.

3. Steering system according to Claim 1 or 2, **characterized in that** a longitudinal axis (16) of the paired internal gear system (7) is coaxial with respect to the longitudinal axis (17) of the steering shaft (2).

4. Steering system according to Claim 3, **characterized in that** the steering shaft (2) reaches around the paired internal gear system (7) or reaches through the latter, and is connected fixedly in terms of rotation to an output shaft (31) of the paired internal gear system (7).

5. Steering system according to Claim 3 or 4, **characterized in that** the servomotor (5) is an electric motor (18) and is arranged on the steering shaft (2).

6. Steering system according to one of Claims 1 to 5, **characterized in that** the longitudinal axis (19) of the servomotor (5) is congruent with respect to the longitudinal axis (16) of the paired internal gear system (7).

7. Steering system according to Claim 5 or 6, **characterized in that** the electric motor (18) is configured as a hollow-shaft motor, it being possible for the rotor (20) of the electric motor (18) to rotate about the steering shaft (2).

8. Steering system according to one of Claims 1 to 7, **characterized in that** the torque of the servomotor (5) is supported on a component (54), which is fixed to the vehicle, of the steering system (1) or of the vehicle, other than on a steering column.

9. Steering system according to one of Claims 1 to 5 and 8, **characterized in that** the servomotor (5) is connected via a gear mechanism (55) to the drive shaft (34) of the paired internal gear system (7).

10. Steering system according to Claim 9, **characterized in that** the gear mechanism (55) is a flexible drive mechanism (56).

11. Steering system according to Claim 9, **characterized in that** the gear mechanism (55) is a gearwheel mechanism.

12. Steering system according to one of Claims 1 to 11, **characterized in that** the servomotor (5) is actuated by a control and/or regulating device (21), the input side of the control and/or regulating device (21) being connected to a torque sensor (22) for determining the steering torque an/or to a sensor (23) for determining the rotational angle of the steering handle (3) and/or to a motor sensor (42).

13. Steering system according to Claim 12, **characterized in that** the servomotor (5) with the control and/or regulating device (21), the paired internal gear system (7), the sensors (22, 23) for determining the steering torque and the rotational angle of the steering handle (3), and the motor sensor (42) are combined in a single housing (24).

14. Steering system according to Claim 12, **characterized in that** the torque sensor (22) and/or the sensor (23) for determining the rotational angle of the steering handle (3) are/is separated spatially from the paired internal gear system (7) and the servomotor (5).

15. Steering system according to one of Claims 1 to 14, **characterized in that** the steering shaft (2) is divided axially into an input shaft (25) and an output shaft (26), the input shaft (25) being connected to the output shaft (26) via a torsion element (27).

16. Steering system according to Claim 15, **characterized in that** the torque sensor (22) is arranged axially between the input shaft (25) and the output shaft (26) of the steering shaft (2), the magnetic resistance which changes as a function of the respective steering torque being determined in a sensor coil (28) on the output shaft (26) under the influence of a magnet (29) which is arranged on the input shaft (25).

17. Steering system according to one of Claims 1 to 16, **characterized in that** the current is supplied and/or the signal is forwarded to the servomotor (5) or to the control and/or regulating device (21) without a transmission device such as sliders or flat spiral springs.

18. Steering system according to one of Claims 12 to 16, **characterized in that** the torque sensor (22) is connected to the control and/or regulating device (21) without plug-in connections, in a manner which forwards signals by way of contacts.

19. Steering system according to one of Claims 1 to 18, **characterized in that** the paired internal gear system (7) is formed substantially from steel.

20. Steering system according to one of Claims 1 to 19, **characterized in that** the paired internal gear system (7) is formed substantially from plastic.

21. Steering system according to one of Claims 1 to 20, **characterized in that** the steering system (1) is configured as a pinion or double-pinion steering system.

22. Steering system according to one of Claims 1 to 21, **characterized in that** a clutch is arranged between the paired internal gear system (7) and the steering gear mechanism (4).

23. Steering system according to one of Claims 1 to 22, **characterized in that** the steering gear mechanism (4) is formed by the paired internal gear system (7).

24. Steering system according to one of Claims 1 to 23, **characterized in that** the steering gear mechanism (4) serves for the direct drive of a wheel steering arm or a steering tie rod or a steering gear arm.

25. Actuator in a steering system of a vehicle, having a servomotor (5), the servomotor (5) driving a drive shaft (34) of a paired internal gear system (7) according to Claims 1 or 2.

## Revendications

1. Système de direction pour un véhicule, notamment servodirection ou direction assistée pour un véhicule automobile, comprenant un arbre de direction (2) pour relier fonctionnellement une prise de direction (3) à un mécanisme de direction (4), et comprenant un servomoteur (5) pour fournir un couple à un arbre d'entraînement (34) d'une liaison par engrenage (6) entre le servomoteur (5) et le mécanisme de direction (4), **caractérisé en ce que** la liaison par engrenage (6) est un système de paire de couronnes (7) se composant d'un pignon (8) avec une première denture (9) qui est déplacé épicycliquement par un excentrique (35) sur l'arbre d'entraînement (34), avec une couronne (10) ayant une deuxième denture (11) qui vient en prise dans la première denture (9) pour provoquer la rotation de la couronne (10) par le pignon (8), la couronne (10) présentant au moins une dent (12) de plus que le pignon (8) et le contact unique entre la première denture (9) et la deuxième denture (11) existant exclusivement d'un côté de la ligne (13) qui s'étend diamétralement à travers les centres (14, 15) du pignon (8) et de la couronne (10) et la première denture (9) étant conjuguée à la deuxième denture (11) et l'angle d'engagement à la pointe de chaque dent de la deuxième denture (11) étant compris entre 2 et 16 degrés.

2. Système de direction pour un véhicule, notamment servodirection ou direction assistée pour un véhicule automobile, comprenant un arbre de direction (2) pour relier fonctionnellement une prise de direction (3) à un mécanisme de direction (4), et comprenant un servomoteur (5) pour fournir un couple à un arbre d'entraînement (34) d'une liaison par engrenage (6) entre le servomoteur (5) et le mécanisme de direction (4), **caractérisé en ce que** la liaison par engrenage (6) est un système de paire de couronnes (7) se composant d'un excentrique (35) connecté fixe en rotation à l'arbre d'entraînement (34), lequel provoque un mouvement épicyclique d'un pignon (8) lors de la rotation de l'arbre d'entraînement (34), le pignon (8) venant en prise avec une denture (45) sur sa périphérie dans une denture fixée au boîtier (46) d'un boîtier (33) du système de paire de couronnes (7), et venant en prise avec une première denture (9) sur le pignon (8) dans une deuxième denture (11) d'une couronne (10) montée à rotation dans le boîtier (33), en vue de faire tourner un arbre de sortie (31) du système de paire de couronnes (7), la couronne (10) présentant au moins une dent (12) de plus que le pignon (8) et le contact unique entre la première denture (9) et la deuxième denture (11) existant exclusivement d'un côté d'une ligne (13) qui s'étend diamétralement à travers les centres (14, 15) du pignon (8) et de la couronne (10) et la première denture (9) étant conjuguée à la deuxième denture (11) et l'angle d'engagement à la pointe de chaque dent de la deuxième denture (11) étant compris entre 2 et 16 degrés.

3. Système de direction selon la revendication 1 ou 2, **caractérisé en ce qu'**un axe longitudinal (16) du système de paire de couronnes (7) est coaxial à l'axe longitudinal (17) de l'arbre de direction (2).

4. Système de direction selon la revendication 3, **caractérisé en ce que** l'arbre de direction (2) vient en prise par le dessous ou à travers le système de paire de couronnes (7) et est connecté fixe en rotation à un arbre de sortie (31) du système de paire de couronnes (7).

5. Système de direction selon la revendication 3 ou 4, **caractérisé en ce que** le servomoteur (5) est un moteur électrique (18) et est disposé sur l'arbre de direction (2).

6. Système de direction selon l'une quelconque des revendications 1 à 5, **caractérisé en ce que** l'axe longitudinal (19) du servomoteur (5) est congruent avec l'axe longitudinal (16) du système de paire de couronnes (7).

7. Système de direction selon la revendication 5 ou 6, **caractérisé en ce que** le moteur électrique (18) est réalisé sous forme de moteur d'arbre creux, le rotor (20) du moteur électrique (18) pouvant tourner autour de l'arbre de direction (2).

8. Système de direction selon l'une quelconque des revendications 1 à 7, **caractérisé en ce que** le couple du servomoteur (5) est supporté sur une composant (54) du système de direction (1) ou du véhicule, fixé au véhicule, autre qu'une colonne de direction.

9. Système de direction selon l'une quelconque des revendications 1 à 5 et 8, **caractérisé en ce que** le servomoteur (5) est connecté par le biais d'une transmission (55) à l'arbre d'entraînement (34) du système de paire de couronnes (7).

10. Système de direction selon la revendication 9, **caractérisé en ce que** la transmission (55) est une transmission à courroie (56).

11. Système de direction selon la revendication 9, **caractérisé en ce que** la transmission (55) est une transmission à engrenage.

12. Système de direction selon l'une quelconque des revendications 1 à 11, **caractérisé en ce que** le servomoteur (5) est commandé par un dispositif de commande et/ou de régulation (21), le dispositif de commande et/ou de régulation (21) étant connecté du côté de l'entrée à un capteur de couple (22) pour déterminer le couple de direction et/ou à un capteur (23) pour déterminer l'angle de rotation de la prise de direction (3) et/ou à un capteur du moteur (42).

13. Système de direction selon la revendication 12, **caractérisé en ce que** le servomoteur (5), avec le dispositif de commande et/ou de régulation (21), le système de paire de couronnes (7), les capteurs (22, 23) pour déterminer le couple de direction et l'angle de rotation de la prise de direction (3) et le capteur du moteur (42) sont rassemblés dans un boîtier unique (24).

14. Système de direction selon la revendication 12, **caractérisé en ce que** le capteur de couple (22) et/ou le capteur (23) pour déterminer l'angle de rotation de la prise de direction (3) sont séparés spatialement du système de paire de couronnes (7) et du servomoteur (5).

15. Système de direction selon l'une quelconque des revendications 1 à 14, **caractérisé en ce que** l'arbre de direction (2) est divisé axialement en un arbre d'entrée (25) et un arbre de sortie (26), l'arbre d'entrée (25) étant connecté à l'arbre de sortie (26) par le biais d'un élément de torsion (27).

16. Système de direction selon la revendication 15, **caractérisé en ce que** le capteur de couple (22) est disposé axialement entre l'arbre d'entrée (25) et l'arbre de sortie (26) de l'arbre de direction (2), la résistance magnétique variant en fonction du couple de direction respectif étant déterminée dans une bobine de capteur (28) au niveau de l'arbre de sortie (26) sous l'influence d'un aimant (29) disposé sur l'arbre d'entrée (25).

17. Système de direction selon l'une quelconque des revendications 1 à 16, **caractérisé en ce que** l'alimentation en courant et/ou la ligne de signal allant au servomoteur (5) ou au dispositif de commande et/ou de régulation (21) s'effectue sans dispositif de transfert tel qu'un curseur ou un ressort spiral.

18. Système de direction selon l'une quelconque des revendications 12 à 16, **caractérisé en ce que** le capteur de couple (22) est connecté au dispositif de commande et/ou de régulation (21) sans raccord à fiche, avec des contacts conduisant les signaux.

19. Système de direction selon l'une quelconque des revendications 1 à 18, **caractérisé en ce que** le système de paire de couronnes (7) est essentiellement réalisé en acier.

20. Système de direction selon l'une quelconque des revendications 1 à 19, **caractérisé en ce que** le système de paire de couronnes (7) est essentiellement réalisé en plastique.

21. Système de direction selon l'une quelconque des revendications 1 à 20, **caractérisé en ce que** le système de direction (1) est réalisé sous forme de direction à pignon ou à double pignon.

22. Système de direction selon l'une quelconque des revendications 1 à 21, **caractérisé en ce que** l'on dispose entre le système de paire de couronnes (7) et le mécanisme de direction (4) un accouplement.

23. Système de direction selon l'une quelconque des revendications 1 à 22, **caractérisé en ce que** le mécanisme de direction (4) est formé par le système de paire de couronnes (7).

24. Système de direction selon l'une quelconque des revendications 1 à 23, **caractérisé en ce que** le mécanisme de direction (4) sert à l'entraînement direct d'un levier de direction de roue ou d'une barre d'accouplement ou d'un levier de direction.

25. Actionneur dans un système de direction d'un véhicule, comprenant un servomoteur (5), le servomoteur (5) entraînant un arbre d'entraînement (34) d'un système de paire de couronnes (7) selon les revendications 1 ou 2.
